(19) Europäisches Patentamt
European Patent Office
Office européen des brevets

(11) **EP 3 535 735 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **17803796.6**

(22) Anmeldetag: **27.10.2017**

(51) Internationale Patentklassifikation (IPC):
**G07D 7/1205** (2016.01)    **G01N 21/64** (2006.01)

(52) Gemeinsame Patentklassifikation (CPC):
**G07D 7/1205;** G01N 21/6408

(86) Internationale Anmeldenummer:
**PCT/EP2017/077556**

(87) Internationale Veröffentlichungsnummer:
**WO 2018/083017 (11.05.2018 Gazette 2018/19)**

(54) **VERFAHREN ZUR ECHTHEITSPRÜFUNG EINES SICHERHEITSMERKMALS UND ANORDNUNG ZUR ECHTHEITSPRÜFUNG EINES SICHERHEITSDOKUMENTS MIT EINEM SICHERHEITSMERKMAL**

METHOD FOR THE AUTHENTICATION OF A SECURITY FEATURE AND ASSEMBLY FOR THE AUTHENTICATION OF A SECURITY DOCUMENT HAVING A SECURITY FEATURE

PROCÉDÉ D'AUTHENTIFICATION D'UNE CARACTÉRISTIQUE DE SÉCURITÉ ET DISPOSITIF D'AUTHENTIFICATION D'UN DOCUMENT DE SÉCURITÉ MUNI D'UNE CARACTÉRISTIQUE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2016 DE 102016120979**

(43) Veröffentlichungstag der Anmeldung:
**11.09.2019 Patentblatt 2019/37**

(73) Patentinhaber: **Bundesdruckerei GmbH 10969 Berlin (DE)**

(72) Erfinder: **BARTEL, Gustav Martin 10317 Berlin (DE)**

(74) Vertreter: **Engel, Christoph Klaus PATENTSCHUTZengel Marktplatz 6 98527 Suhl (DE)**

(56) Entgegenhaltungen:
**DE-A1- 10 113 268**

EP 3 535 735 B1

**Beschreibung**

Die vorliegende Erfindung betrifft ein Verfahren zur Echtheitsprüfung eines Sicherheitsmerkmals, welches einen Anti-Stokes-Leuchtstoff enthält, bei welchem die Wellenlänge einer elektromagnetischen Emission kürzer als die Wellenlänge einer absorbierten elektromagnetischen Anregungsstrahlung ist. Außerdem betrifft die Erfindung eine Anordnung zur Echtheitsprüfung eines Sicherheitsdokuments mit einem solchen Sicherheitsmerkmal.

Aus dem Stand der Technik ist es seit langem bekannt Sicherheitsdokumente mit Sicherheitsmerkmalen in Form von lumineszierenden Substanzen zu versehen, um sie dadurch fälschungssicher bzw. verifizierbar zur machen. Sicherheitsdokumente im Sinne der Erfindung sind insbesondere Briefmarken, Steuerbanderolen, Banknoten, Reisepässe, ID-Karten, Führerscheine, Tickets und ähnliche Dokumente oder Gegenstände, bei denen der Bedarf der Fälschungssicherheit besteht. Beispielsweise eignen sich Anti-Stokes-Leuchtstoffe zur Anwendung als Sicherheitsmerkmal in Sicherheitsdokumenten. Der Anti-Stokes-Leuchtstoff dient zur Codierung, Identifizierung und Echtheitsprüfung des Sicherheitsmerkmals und damit des Sicherheitsdokuments.

Die EP 0 053 183 B1 zeigt ein Wertpapier mit Echtheitsmerkmalen in Form von lumineszierenden und absorbierenden Substanzen, die mit unsichtbarem und/oder sichtbarem Licht anregbar sind und nur im unsichtbaren Bereich des optischen Spektrums lumineszieren.

In der DE 25 47 768 A1 wird die Verwendung von Anti-Stokes-Leuchtstoffen, wie beispielsweise $LnF_3:Yb^{3+},Er^{3+}$ als Markierung in Ausweisdokumenten gezeigt.

Die GB 2 258 659 A zeigt einen Anti-Stokes-Leuchtstoff, welcher ein Yttriumoxysulfid umfasst, in welches 4 - 50 Gew.% Er und/oder Yb sowie 1 - 50 ppm eines Lanthanoids dotiert sind.

Die GB 2 258 660 A zeigt einen Anti-Stokes-Leuchtstoff, welcher aus einer geschmolzenen Mischung mehrerer Selten-Erd-Verbindungen hergestellt ist und in Form von Partikeln einer Größe von nicht mehr als 40 $\mu$m ausgebildet ist. Der Anti-Stokes-Leuchtstoff umfasst bevorzugt ein dotiertes Yttriumoxysulfid.

Die US 5,698,397 zeigt die Verwendung von Up-Conversion-Leuchtstoffen zur Analyse von biologischen Proben. Die Leuchtstoffe werden als Markierungselemente an die biologischen Proben angebracht, um diese wiedererkennen zu können, beispielsweise mit dem Ziel, Viren mithilfe eines Mikroskops finden zu können. Als Leuchtstoff wird u. a. $(Gd_{0,87}Yb_{0,13}Tm_{0,001})_2O_2S$ angeführt. Ytterbium fungiert dabei als Absorberion, während Thulium als Emitterion fungiert.

Die DE 102 08 397 A1 zeigt eine Anti-Stokes-Leuchtstoffzusammensetzung der allgemeinen chemischen Formel $(M_x,Yb_y,Tm_z)_2O_2S$, wobei y bevorzugt im Bereich zwischen 0,15 und 0,3 liegt, während z bevorzugt im Bereich zwischen 0,0025 und 0,03, besonders bevorzugt zwischen 0,0075 und 0,02 liegt. M kann durch Yttrium, Gadolinium oder Lanthan gebildet sein. Die Anti-Stokes-Leuchtstoffzusammensetzung kann als Markierung in Chipkarten, Ausweise, Banknoten oder Urkunden zur Vermeidung von Fälschungen eingebracht werden.

Die DE 103 22 794 A1 zeigt einen Sensor zur Echtheitserkennung eines lumineszierenden Sicherheitselementes. Als Sicherheitselement können bevorzugt Anti-Stokes-Pigmente der Zusammensetzung $(Gd_{1-x-y},Yb_x,Tm_y)_2O_2S$ mit $0,20 \leq x \leq 0,60$ und $0,0001 \leq y \leq 0,05$ verwendet werden. Durch eine Wahl der Konzentrationen des Ytterbiums, des weiteren Seltenerd-Metalls sowie weiterer Kationen und/oder Anionen kann die An- und Abklingzeit auf einen Bereich zwischen 1 $\mu$s und 200 $\mu$s eingestellt werden, insbesondere zwischen 10 $\mu$s und 50 $\mu$s.

Die DE 101 13 268 A1 beschreibt ein Verfahren und einen Sensor für die Echtheitserkennung von Sicherheitsmerkmalen auf Wert und/oder Sicherheitsdokumenten. Ein Sicherheitselement, welches das Sicherheitsmerkmal enthält, wird mit Strahlung einer fest voreingestellten Anregungswellenlänge angeregt. Die vom Sicherheitselement emittierte Strahlung wird von einer Erfassungseinheit erfasst und von einer Auswerteeinheit ausgewertet, wobei das Intensitätsprofil der emittierten Strahlung in einem Wellenlängenbereich über einen Messzeitraum nach der Anregung analysiert wird.

Die EP 1 241 242 A2 zeigt einen Anti-Stokes-Leuchtstoff für die Anwendung in Sicherheitsdokumenten, welcher eine Zusammensetzung der chemischen Formel $(Gd_{1-x-y},Yb_x,Tm_y)_2O_2S$ aufweist. Ytterbium wirkt als Absorberion zur Absorption von elektromagnetischer Strahlung, während Thulium als Emitterion zur Emission von elektromagnetischer Strahlung wirkt. Die Konzentrationen der Absorberionen und der Emitterionen sind zur Variation der Anklingzeiten und/oder der Abklingzeiten des Anti-Stokes-Leuchtstoffes so gewählt, dass eine anteilige Löschung der Anti-Stokes-Lumineszenz auftritt. Dabei gilt bevorzugt $0,05 \leq x \leq 0,80$ und $0,0001 \leq y \leq 0,1$ sowie besonders bevorzugt $0,20 \leq x \leq 0,60$ und $0,0001 \leq y \leq 0,05$. Darüber hinausgehende Vorgaben zur Wahl von x und y mit dem Ziel anpassbarer Anklingund Abklingzeiten sind nicht angegeben.

Zur Verifikation bzw. Echtheitsprüfung von Sicherheitsdokumenten werden spezielle Detektionsgeräte benötigt, welche zumeist stationär betrieben werden und nur einer eingeschränkten Nutzergruppe zur Verfügung stehen. Darüber hinaus gibt es seit einiger Zeit Bestrebungen, Detektoren auch für mobile Anwendungen zur Verfügung zu stellen.

Die DE 10 2004 056 007 A1 zeigt eine mobile Verifikationseinrichtung zur Echtheitsüberprüfung von Reisedokumenten. Die Verifikationseinrichtung umfasst eine Identifizierungseinrichtung zur Identifizierung eines berechtigten Benutzers, eine Freigabeeinrichtung zur Freigabe der Verifikationseinrichtung aufgrund eines Signals der Identifizierungseinrichtung, eine optische Leseeinheit zum Auslesen von auf den Seiten des Reisedokuments enthaltener bildmäßiger bzw. alphanumerischer Information, eine Datenverarbeitungseinrichtung zur Verarbeitung der von der optischen Leseeinheit gelieferten Signale nach einem vorgegebenen Algorithmus, eine Anzeigeeinheit zur Anzeige der ausgelesenen Daten sowie des Verifikationsergebnisses sowie eine Kommunikationseinheit zur verschlüsselten Übermittlung der ausgelesenen Daten bzw. des Verifikationsergebnisses an eine zentrale Stelle. Als optische Leseeinheit kommt beispielsweise eine Kamera zum Einsatz, welche vorzugsweise eine Beleuchtungseinrichtung mit modulierbaren, insbesondere pulsbaren Lichtquellen, wie LEDs bzw. Laserdioden aufweist. Durch Verwendung derartiger Beleuchtungssysteme können die in Pigmenten von Druckfarben enthaltenen Sicherheitselemente angeregt werden und die dabei gewonnenen Signale ebenfalls zur Echtheitsprüfung herangezogen werden.

Um die Echtheit von mit Anti-Stokes-Leuchtstoffen (Up-Converter) ausgerüsteten Sicherheitsmerkmalen zu prüfen, wird die Strahlungsintensität der Emission nach Anregung mit einer vorbestimmten Anregungsstrahlung gemessen. Üblicherweise wird der Leuchtstoff dazu so lange angeregt, bis eine Sättigung eingetreten ist, d.h. die maximale Strahlungsintensität erreicht ist, die Anregung wird dann abgeschaltet, um die Messung nicht zu verfälschen, und während einer Abklingphase wird die Strahlungsintensität zu einem bzw. mehreren vorbestimmten Zeitpunkten bestimmt. Zur Bestimmung der Messzeitpunkte dienen Zeitkonstanten $\tau$.

Das charakteristische Emissionsverhalten eines Anti-Stokes-Leuchtstoffes, über welchen das damit ausgerüstete Sicherheitsmerkmal als "ECHT" deklariert werden kann, ergibt sich als Verlauf der Strahlungsintensität bzw. der daraus resultierenden Sensorspannung an einem Messsensor, wie folgt:

$$u(t) = U_{max} * 1 - e^{-t/\tau}$$

wobei je nach Größe von $\tau$ z. B. 63,2% (bei $\tau$=1) oder 95% (bei $\tau$=3) von $U_{max}$ (d. h. der Sättigung des verwendeten Anti-Stokes-Leuchtstoffes) erreicht sein müssen.

In herkömmlichen Verfahren zur Echtheitsprüfung kann $\tau$ erst ermittelt werden wenn $U_{max}$ oder ein dort naher Wert (z. B. 3$\tau$, also 95%) erreicht wird. Dies bedeutet allerdings, dass bei der Messung gewartet werden muss, bis die Intensität bzw. Sensorspannung einen zuvor definierten Zielwert erreicht. Für Hochgeschwindigkeitsprüfungen stellt dies eine problematische zeitliche Beschränkung dar. Um die Echtheit des Sicherheitsmerkmals zu bestätigen, wird geprüft, ob die $\tau$-Konstanten "ECHT" sind, d. h. die erwarteten Strahlungsintensitäten zu mehreren vorbestimmten Zeitpunkten in der Abklingphase (z. B. $\tau$, 3$\tau$) eingehalten werden. Dies stellt hohe Anforderungen an die zu erreichenden bzw. zu messenden Intensitäten, die sich immer in ähnlichen Bereichen befinden müssen und auch nicht unterschiedlich altern dürfen. Zudem ist die Definition der zu erreichenden Intensitäten sehr komplex da eine hohe Abhängigkeit von Stoffkonzentration in den verwendeten Farben bzw. den genutzten Druckmustern von Sicherheitsdokumenten besteht, die nur durch Referenzproben berücksichtigt werden kann.

Die Aufgabe der vorliegenden Erfindung besteht ausgehend vom Stand der Technik darin, ein verbessertes Verfahren zur Echtheitsprüfung von Sicherheitsmerkmalen mit Anti-Stokes-Leuchtstoffen zur Verfügung zu stellen, welches eine schnellere und sicherere Echtheitsprüfung gestattet. Des Weiteren soll eine verbesserte Anordnung zur Echtheitsprüfung bereitgestellt werden.

Die genannte Aufgabe wird durch ein Verfahren zur Echtheitsprüfung eines Sicherheitsmerkmals, welches einen Anti-Stokes-Leuchtstoff enthält, gemäß dem beigefügten Anspruch 1 gelöst. Die Aufgabe wird weiterhin durch eine Anordnung zur Echtheitsprüfung eines Sicherheitsdokuments mit einem Sicherheitsmerkmal, welches einen Anti-Stokes-Leuchtstoff enthält, gemäß dem beigefügten Anspruch 9 gelöst.

Das erfindungsgemäße Verfahren dient der Echtheitsprüfung eines Sicherheitsmerkmals, welches einen Anti-Stokes-Leuchtstoff enthält, bei welchem die Wellenlänge einer elektromagnetischen Emission kürzer als die Wellenlänge einer absorbierten elektromagnetischen Anregungsstrahlung ist. Das Verfahren untergliedert sich zunächst in zwei Betriebsmodi, nämlich einen Kalibrierungsmodus und einen Prüfmodus. Der Kalibrierungsmodus startet mit einer Anregung mehrerer Kalibrierungsmuster des Sicherheitsmerkmals mittels der Anregungsstrahlung für einen Anregungszeitraum. Der Anregungszeitraum beginnt mit einer Anklingphase und erstreckt sich dann vorzugsweise bis eine Sättigungsintensität der Emission erreicht wird. Nachfolgend wird die Anregung beendet, woraufhin sich eine Abklingphase anschließt, in welcher die Emission abklingt. Innerhalb eines Zeitraums (Anregungszeitraum) sind somit eine Anklingphase und eine Abklingphase enthalten, wobei die Abklingphase mit dem Beenden der Anregung beginnt, wobei sich das angeregte Muster aber weiterhin im angeregten Zustand befindet und Strahlung emittiert.

In anderen Ausführungsformen schließt sich die Abklingphase sofort an eine verkürzte Anklingphase an, sodass das Erreichen der Sättigung nicht abgewartet werden muss. Die Emissionsantworten der Kalibrierungsmuster werden über der Zeit erfasst und mehrere Emissionsantworten verschiedener Kalibrierungsmuster mit unterschiedlichen Intensitätsverläufen bzw. unterschiedlichen Sättigungsintensitäten werden ausgewählt. Für ausgewählten Emissionsantworten wird die Steilheit ermittelt, die ein Maß der Änderung der Emission über der Zeit darstellt. Es wird ein erster Kontrollzeitpunkt $\tau_{on}$ in der Anklingphase vor Erreichen der Sättigungsintensität und ein zweiter Kontrollzeitpunkt $\tau_{off}$ in der Abklingphase nach Beenden der Anregung festgelegt. Weiterhin wird ein erster Gültigkeitswerts (Schwellwert), welcher dem maximalen Wert der Steilheit der ausgewählten Kalibrierungsmuster am ersten Kontrollzeitpunkt $\tau_{on}$ entspricht, und ein zweiter Gültigkeitswerts, welcher dem maximalen Wert der Steilheit der ausgewählten Kalibrierungsmuster am zweiten Kontrollzeitpunkt $\tau_{off}$ entspricht festgelegt und für eine spätere Verwendung im Prüfmodus abgespeichert.

Nach dem Kalibrieren im Kalibriermodus stehen die Grenzwerte zur Verfügung, die für eine nachfolgende Echtheitsprüfung beliebiger Sicherheitsmerkmale (der genannten Kategorie) herangezogen werden können. Im Prüfmodus erfolgt dafür die Anregung des zu prüfenden Sicherheitsmerkmals mittels der Anregungsstrahlung über den Anregungszeitraum und nachfolgend das Beenden der Anregung. Die Emissionsantwort des zu prüfenden Sicherheitsmerkmals wird erfasst, mindestens zum ersten Kontrollzeitpunkt $\tau_{on}$ und zum zweiten Kontrollzeitpunkt $\tau_{off}$. Die Steilheit der erfassten Emissionsantwort wird ermittelt und das zu prüfende Sicherheitsmerkmal wird als "echt" klassifiziert, wenn die Werte der Steilheit zum ersten Kontrollzeitpunkt $\tau_{on}$ nicht größer als der erste Gültigkeitswert und zum zweiten Kontrollzeitpunkts $\tau_{off}$ nicht größer als der zweite Gültigkeitswert sind.

Die Erfindung beruht auf der Erkenntnis, dass anstelle des Maßes der Emissionsintensität (Sensorspannung $U_{max}$) das Maß der Änderung von $U_{max}$/Emissionsintensität über die Zeit (also die Steigung) als Echtheitskriterium genutzt werden kann und zwar basierend auf bereits zu einem frühen Zeitpunkt der Auslösung einer Emission durch Anregung mit der Anregungsstrahlung gewonnenen Messwerten.

Ein wesentlicher Vorteil des erfindungsgemäßen Verfahrens besteht darin, dass eine intensitätsunabhängige, wesentlich schnellere und dabei weiterhin sichere Echtheitsprüfung von Anti-Stokes-Leuchtstoffen möglich wird. Die Transportgeschwindigkeit von Sicherheitsdokumenten mit Sicherheitsmerkmalen, die Anti-Stokes-Leuchtstoffe enthalten, in entsprechenden Prüfanordnungen kann trotz der relativ langsam reagierenden Pigmente erhöht werden, da bei der Verifikation nicht mehr bis zum Erreichen $U_{max}$ eine Dauer von $3\tau$ gewartet werden muss. Alternativ sind bei heute realisierten Prüfgeschwindigkeiten nunmehr auch mehr Messungen pro Messobjekt möglich, beispielsweise um die Zuverlässigkeit bzw. Stabilität der Prüfung zu erhöhen. Ebenso können bis dato "zu langsame" Anti-Stokes-Leuchtstoffe nunmehr in maschinell zu prüfenden Anwendungen genutzt werden. Während in Verfahren nach dem Stan der Technik Prüfzeiten im Bereich von von $3\tau$ bis $4\tau$ erforderlich sind, gestattet das erfindungsgemäße Verfahren die Auswertung der Emissionsantwort bereits zum Zeitpunkt $1\tau$. Damit können aktuelle Transportgeschwindigkeiten bei ansonsten unverändertem Aufbau der Prüfmaschinen von 4 m/s auf 12 oder 16 m/s erhöht werden.

Außerdem sinkt durch die Nutzung des erfindungsgemäßen Verfahrens die Intensitätsabhängigkeit des Sicherheitsmerkmals, was die Unabhängigkeit des gesamten Sicherheitssystems von Sensormessfehlern, von Konzentrationsdotierungen in Farben und von der Alterung der Sicherheitsdokumente deutlich erhöht.

Gemäß einer bevorzugten Ausführungsform erfolgt im Kalibrierungsmodus das Festlegen eines dritten Gültigkeitswerts, welcher dem minimalen Wert der Steilheit der ausgewählten Kalibrierungsmuster am ersten Kontrollzeitpunkt ($\tau_{on}$) entspricht, und eines vierten Gültigkeitswerts, welcher dem minimalen Wert der Steilheit der ausgewählten Kalibrierungsmuster am zweiten Kontrollzeitpunkt ($\tau_{off}$) entspricht. Im Prüfmodus wird das zu prüfende Sicherheitsmerkmal dann als "echt" klassifiziert, wenn die Werte der Steilheit zum ersten Kontrollzeitpunkt ($\tau_{on}$) im Bereich zwischen erstem und drittem Gültigkeitswert und zum zweiten Kontrollzeitpunkts ($\tau_{off}$) im Bereich zwischen zweitem und viertem Gültigkeitswert liegen. Auf diese Weise lassen sich die geprüften Sicherheitsmerkmale genauer klassifizieren.

Bei dem Leuchtstoff, welcher im Sicherheitsmerkmal integriert ist bzw. dieses bildet, handelt es sich um einen Anti-Stokes-Leuchtstoff, welcher auch als Up-Conversion-Leuchtstoff bezeichnet wird. Der Anti-Stokes-Leuchtstoff ist zur Anwendung in Sicherheitsdokumenten ausgebildet, wofür er spezielle Eigenschaften aufweisen muss. Beispielsweise muss er so beschaffen sein, dass er in ein Sicherheitsdokument unauffällig eingebracht werden kann. Ferner muss er eindeutig identifizierbar sein. Hingegen soll es einem Unberechtigten nur schwer möglich sein, den Anti-Stokes-Leuchtstoff auffinden zu können. Im Gegensatz zu anderen Anwendungen von Leuchtstoffen muss der Anti-Stokes-Leuchtstoff zur Anwendung in Sicherheitsdokumenten nicht derart ausgebildet sein, dass er eine möglichst hohe Effizienz aufweist.

Aufgrund der Anti-Stokes-Eigenschaft ist die Wellenlänge einer emittierten elektromagnetischen Strahlung des Anti-Stokes-Leuchtstoffes kürzer als die Wellenlänge einer absorbierten elektromagnetischen Strahlung (Anregung). Beispielsweise kann der Anti-Stokes-Leuchtstoff derart ausgebildet sein, dass vergleichsweise energiearme infrarote Anregungsstrahlung in energiereichere Strahlung umgewandelt wird. Die emittierte Strahlung kann sowohl im sichtbaren als auch im nicht sichtbaren Wellenlängenbereich liegen.

Ein geeigneter Anti-Stokes-Leuchtstoff weist ein Gadoliniumoxysulfid-Grundgittermaterial der Zusammensetzung $Gd_2O_2S$ auf, in welches Ytterbium und Thulium dotiert sind. Die Ionen des Ytterbium und des Thulium nehmen Gitterplätze des Gadoliniums ein. Der Anti-Stokes-Leuchtstoff kann durch die chemische Formel $(Gd_{1-x-y}Yb_xTm_y)_2O_2S$ oder auch durch die Formel $(Gd_{1-x-y})_2O_2S{:}Yb_xTm_y$ beschrieben werden, wobei die Variablen x und y die Anteile von Yb und Tm repräsentieren. Da die Anteile der dotierten Elemente zumeist recht klein sind, ist es mitunter auch üblich, auf deren Angabe zu verzichten, wodurch man zu der vereinfach-

ten Formel Gd$_2$O$_2$S:Yb,Tm gelangt. In diesem Anti-Stokes-Leuchtstoff wirkt Yb als Absorberion zur Absorption von elektromagnetischer Strahlung. Das Tm wirkt als Emitterion zur Emission von elektromagnetischer Strahlung. Die Charakteristik der von diesem Anti-Stokes-Leuchtstoff emittierten elektromagnetischen Strahlung hängt insbesondere von den Konzentrationen des Yb und/oder des Tm ab.

Es soll aber keine Einschränkung auf den zuvor genannten Anti-Stokes-Leuchtstoff erfolgen. Das erfindungsgemäße Verfahren kann auch zur Echtheitsprüfung anderer Leuchtstoffe verwendet werden.

Grundsätzlich weisen Anti-Stokes-Leuchtstoffe im Vergleich zu Photo- oder Kathodoleuchtstoffen relativ lange Anklingzeiten auf, was bei der Detektion des Anti-Stokes-Leuchtstoffes zu berücksichtigen ist. Insbesondere bei der Anwendung in Sicherheitsdokumenten muss ein entsprechendes Anregungs- und Detektionssystem so konfiguriert sein, dass es den Anti-Stokes-Leuchtstoff trotz der langen Anklingzeit erkennen kann. Das hier vorgeschlagene Verfahren verkürzt den für die Echtheitsprüfung erforderlichen Zeitraum deutlich, sodass auch Anti-Stokes-Leuchtstoffe mit längeren Abklingzeiten schnell verifiziert werden können.

Geeignete Anti-Stokes-Leuchtstoffe sind bevorzugt derart ausgebildet, dass sie eine Anklingzeit zwischen 400 µs und 1000 µs aufweisen, was insbesondere durch die Wahl der Konzentrationen der Absorberionen und Emitterionen in den oben genannten Wertebereichen erzielt werden kann. Geeignete Anti-Stokes-Leuchtstoffe sind bevorzugt derart ausgebildet, dass sie eine Abklingzeit von weniger als 300 µs und besonders bevorzugt von weniger als 100 µs aufweisen. Derartige Abklingzeiten sind durch eine Wahl der Konzentrationen der Absorberionen und Emitterionen erzielbar.

Bei einer bevorzugten Ausführungsform des Anti-Stokes-Leuchtstoffes, der in einem durch das erfindungsgemäße Verfahren zu verifizierenden Sicherheitsmerkmal enthalten ist, liegt die emittierte elektromagnetische Strahlung im sichtbaren oder im nicht-sichtbaren Lichtbereich, während die absorbierte elektromagnetische Strahlung im infraroten Bereich liegt. Das Sicherheitsmerkmal kann beispielsweise verdruckt werden. Zum Verdrucken können die dem Fachmann bekannten Druckverfahren verwendet werden, z.B. Tintenstrahldruck, Offset, Stichdruck, Tiefdruck, Siebdruck usw.

Die von der Erfindung weiterhin betroffene Anordnung zur Echtheitsprüfung eines Sicherheitsdokuments mit einem Sicherheitsmerkmal, welches einen Anti-Stokes-Leuchtstoff enthält, umfasst eine Lichtquelle zur Bestrahlung des Sicherheitsmerkmals mit einer Anregungsstrahlung, einen Fotosensor zum Erfassen der Emissionsantwort des Sicherheitsmerkmals, eine Speichereinheit und eine Datenverarbeitungseinheit. Die Anordnung ist konfiguriert, um das zuvor genannte erfindungsgemäße Verfahren auszuführen. Insbesondere ist die Datenverarbeitungseinheit in die Lage versetzt, die Steilheit der Emissionsantworten zu ermitteln, den ersten Kontrollzeitpunkt $\tau_{on}$ in der Anklingphase vor Erreichen der Sättigungsintensität und den zweiten Kontrollzeitpunkt $\tau_{off}$ in der Abklingphase nach Beenden der Anregung festzulegen und abzuspeichern, sowie den ersten Gültigkeitswert, welcher dem maximalen Wert der Steilheit der ausgewählten Kalibrierungsmuster am ersten Kontrollzeitpunkt $\tau_{on}$ entspricht, und den zweiten Gültigkeitswert, welcher dem maximalen Wert der Steilheit der ausgewählten Kalibrierungsmuster am zweiten Kontrollzeitpunkt $\tau_{off}$ entspricht, festzulegen und abzuspeichern.

Die Anordnung zur Echtheitsprüfung ist bevorzugt so konfiguriert, dass sie auch die zuvor beschriebenen Abwandlungen des erfindungsgemäßen Verfahrens einzeln oder in beliebiger Kombination realisieren kann.

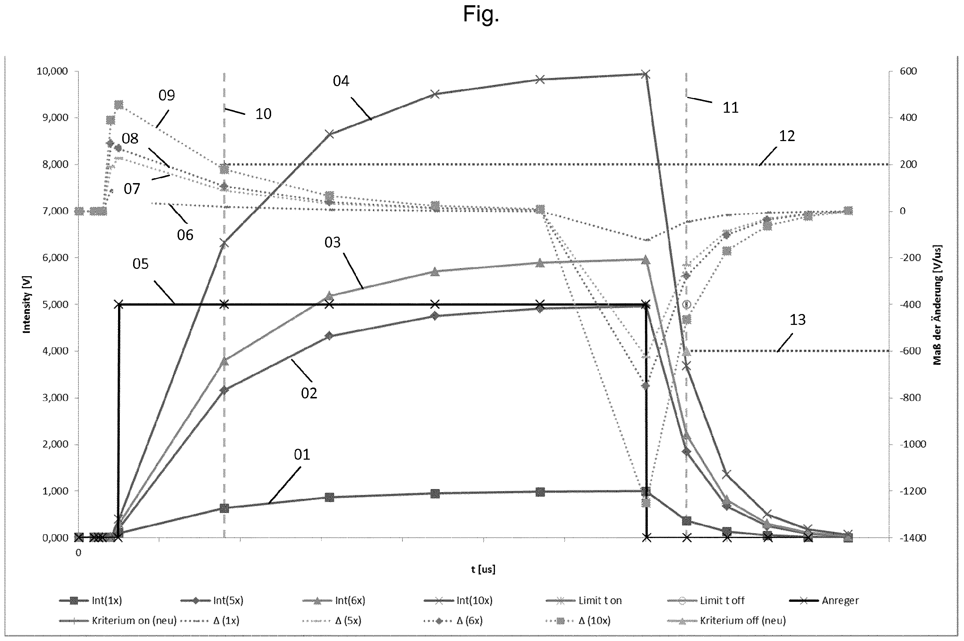

Weitere Einzelheiten und Vorteile der Erfindung ergeben sich aus der nachfolgenden Beschreibung einer bevorzugten Ausführungsform, unter Bezugnahme auf die Zeichnung.

Die einzige Figur zeigt als Diagramm das An- und Abklingverhalten eines Anti-Stokes-Leuchtstoffes.

In dem Diagramm zeigen vier mit Volllinien dargestellte Kurven 01 - 04 die Emissionsantworten von vier Kalibrierungsmustern, d. h. die Intensitäten Int(1x), Int(5x), Int(6x) und Int(10x). Die Kalibrierungsmuster sind mit dem gleichen Anti-Stokes-Leuchtstoff bestückt, der jedoch abhängig von z. B. Stoffdotierung der Farbe oder unterschiedlicher Druckart unterschiedliche Intensitäten in der Sättigung zeigt. Eine Kurve 05 zeigt den zeitlichen Verlauf einer Anregungsstrahlung. Außerdem zeigen vier mit gepunkteten Linien dargestellte Kurven 06 - 09 für die jeweiligen Muster die Maße der Änderung der Emissionsantworten über die Zeit, d. h. die Steilheit Δ(1x), Δ(5x), Δ(6x) und Δ(10x).

Die Steilheit ergibt sich pro Messpunkt durch

$$\Delta = \Delta Int / \Delta t$$

Im Diagramm wurde pro $\tau$ ein Messpunkt aufgezeichnet.

Im Diagramm sind weiterhin zwei gestrichelte senkrechte Linien 10, 11 eingezeichnet, welche einen ersten Kontrollzeitpunkt $\tau_{on}$ in der Anklingphase vor Erreichen der Sättigungsintensität und einen zweiten Kontrollzeitpunkt $\tau_{off}$ in der Abklingphase nach Beenden der Anregungen definieren. Die Kontrollzeitpunkte sind jeweils zum Zeitpunkt $\tau_{on}$ bzw. $\tau_{off}$ festgelegt, wobei diese Zeitpunkte je nach Anwendungsfall gewählt werden können.

Zu einer deutliche Verkürzung der benötigten Messzeit führt es, wenn die Anklingphase der Anregung abgekürzt wird, d. h. die Anregung endet, bevor die Sättigungsintensität erreicht ist. Auch in diesem Fall können Die Kontrollzeitpunkte $\tau_{on}$ bzw. $\tau_{off}$ in der Anklingphase bzw. Abklingphase festgelegt werden, die dann aber zeitlich näher beieinander liegen, als im Diagramm dargestellt.

Schließlich sind im Diagramm zwei gepunktete waagerechte Linien 12, 13 eingezeichnet, welche einen ersten Gültigkeitswert, der dem maximalen Wert der Steilheit der ausgewählten Kalibrierungsmuster am ersten Kontrollzeitpunkt $\tau_{on}$ entspricht, und einen zweiten Gültigkeitswert, der dem maximalen Wert der Steilheit der ausgewählten Kalibrierungsmuster am zweiten Kontrollzeitpunkt $\tau_{off}$ entspricht, kennzeichnen.

Im Prüfmodus werden an den Kontrollzeitpunkten die jeweils aus der Emissionsantwort des zu prüfenden Sicherheitsmerkmals errechneten Werte der Steilheit mit den zuvor bestimmten Gültigkeitswerten verglichen. Ein Sicherheitsmerkmal wird anhand dieses Vergleichs als "echt" bewertet, wenn die Werte der Steilheit zum ersten Kontrollzeitpunkt $\tau_{on}$ nicht größer als der erste Gültigkeitswert und zum zweiten Kontrollzeitpunkts $\tau_{off}$ nicht größer als der zweite Gültigkeitswert sind.

Für die im Diagramm eingezeichneten Emissionsantworten 01 - 04 ergibt sich bei dieser Prüfung folgendes Ergebnis:

erster Grenzwert: $\Delta_{on}$ nach $1*\tau_{on}$ < 200 V/µs
zweiter Grenzwert $\Delta_{off}$ nach $1*\tau_{off}$ > -600 V/µs
Int (1x) = "ECHT" (Kriterien $\Delta_{on}$ und $\Delta_{off}$ erfüllt)
Int (5x) = "ECHT" (Kriterien $\Delta_{on}$ und $\Delta_{off}$ erfüllt)
Int (6x) = "ECHT" (Kriterien $\Delta_{on}$ und $\Delta_{off}$ erfüllt)
Int (10x) = "ECHT" (Kriterien $\Delta_{on}$ und $\Delta_{off}$ erfüllt)

Bei einer abgewandelten Ausführung werden weitere Gültigkeitswerte festgelegt, um jeweils einen zulässigen Gültigkeitsbereich an den Kontrollzeitpunkten zu definieren. In diesem Fall müssen die Emissionsantworten im Prüfmodus dann in den jeweiligen Bereichen liegen.

## Bezugszeichen

| | |
|---|---|
| 01 - 04 | - Emissionsantworten von Kalibrierungsmustern |
| 05 | - Verlauf einer Anregungsstrahlung |
| 06 - 09 | - Steilheit der Emissionsantworten |
| 10 | - erster Kontrollzeitpunkt $\tau_{on}$ |
| 11 | - zweiter Kontrollzeitpunkt $\tau_{off}$ |
| 12 | - erster Gültigkeitswert |
| 13 | - zweiter Gültigkeitswert |

## Patentansprüche

1. Verfahren zur Echtheitsprüfung eines Sicherheitsmerkmals, welches einen Anti-Stokes-Leuchtstoff enthält, bei welchem die Wellenlänge einer elektromagnetischen Emission kürzer als die Wellenlänge einer absorbierten elektromagnetischen Anregungsstrahlung ist, folgende Schritte umfassend:

   a) in einem Kalibrierungsmodus:

- Anregung mehrerer Kalibrierungsmuster des Sicherheitsmerkmals mittels der Anregungsstrahlung für einen Anregungszeitraum und nachfolgendes Beenden der Anregung, wobei der Anregungszeitraum mindestens eine Anklingphase und eine Abklingphase umfasst;
- Erfassen der Emissionsantworten der Kalibrierungsmuster über der Zeit und Auswahl mehrerer Emissionsantworten verschiedener Kalibrierungsmuster;
- Ermitteln der Steilheit der ausgewählten Emissionsantworten;
- Festlegen eines ersten Kontrollzeitpunkts ($\tau_{on}$) in der Anklingphase vor Erreichen der Sättigungsintensität und eines zweiten Kontrollzeitpunkts ($\tau_{off}$) in der Abklingphase nach Beenden der Anregung;
- Festlegen eines ersten Gültigkeitswerts, welcher dem maximalen Wert der Steilheit der ausgewählten Kalibrierungsmuster am ersten Kontrollzeitpunkt ($\tau_{on}$) entspricht und eines zweiten Gültigkeitswerts, welcher dem maximalen Wert der Steilheit der ausgewählten Kalibrierungsmuster am zweiten Kontrollzeitpunkt ($\tau_{off}$) entspricht;

   b) in einem Prüfmodus:

- Anregung des zu prüfenden Sicherheitsmerkmals mittels der Anregungsstrahlung über den Anregungszeitraum und nachfolgendes Beenden der Anregung;
- Erfassen der Emissionsantwort des zu prüfenden Sicherheitsmerkmals mindestens zum ersten Kontrollzeitpunkt ($\tau_{on}$) und zum zweiten Kontrollzeitpunkt ($\tau_{off}$) ;
- Ermitteln der Steilheit der erfassten Emissionsantwort;
- Klassifizieren des zu prüfenden Sicherheitsmerkmals als "echt", wenn die Werte der Steilheit zum ersten Kontrollzeitpunkt ($\tau_{on}$) nicht größer als der erste Gültigkeitswert und zum zweiten Kontrollzeitpunkts ($\tau_{off}$) nicht größer als der zweite Gültigkeitswert sind.

2. Verfahren nach Anspruch 1, **dadurch gekennzeichnet, dass** im Kalibrierungsmodus von mindestens drei, vorzugsweise von vier oder mehr Kalibrierungsmustern die Emissionsantworten erfasst und

**3.** Verfahren nach Anspruch 1 oder 2, **dadurch gekennzeichnet, dass** die Anregung mit der Anregungsstrahlung bis zum Erreichen einer Sättigungsintensität der Emission erfolgt, bevor die Anregung beendet wird.

**4.** Verfahren nach einem der Ansprüche 1 bis 3, **dadurch gekennzeichnet, dass** der erste Kontrollzeitpunkt ($\tau_{on}$) festgelegt wird auf den Zeitpunkt an welchem in der Anklingphase die Emissionsantwort des Kalibrierungsmusters mit der höchsten Sättigungsintensität etwa 63,2% dieser Sättigungsintensität erreicht hat, und dass der zweite Kontrollzeitpunkt festgelegt ($\tau_{off}$)wird auf den Zeitpunkt an welchem in der Abklingphase die Emissionsantwort des Kalibrierungsmusters mit der höchsten Sättigungsintensität etwa 36,8% dieser Sättigungsintensität erreicht hat.

**5.** Verfahren einem der Ansprüche 1 bis 4, weiterhin folgende Schritte umfassend: im Kalibrierungsmodus Festlegen eines dritten Gültigkeitswerts, welcher dem minimalen Wert der Steilheit der ausgewählten Kalibrierungsmuster am ersten Kontrollzeitpunkt ($\tau_{on}$) entspricht, und eines vierten Gültigkeitswerts, welcher dem minimalen Wert der Steilheit der ausgewählten Kalibrierungsmuster am zweiten Kontrollzeitpunkt ($\tau_{off}$) entspricht; und im Prüfmodus Klassifizieren des zu prüfenden Sicherheitsmerkmals als "echt", wenn die Werte der Steilheit zum ersten Kontrollzeitpunkt ($\tau_{on}$) im Bereich zwischen erstem und drittem Gültigkeitswert und zum zweiten Kontrollzeitpunkts ($\tau_{off}$) im Bereich zwischen zweitem und viertem Gültigkeitswert liegen.

**6.** Verfahren nach einem der Ansprüche 1 bis 5, **dadurch gekennzeichnet, dass** der Anti-Stokes-Leuchtstoff ein Gadoliniumoxysulfid ist, insbesondere der Zusammensetzung $Gd_2O_2S$, in welches Ytterbium und Thulium dotiert sind.

**7.** Verfahren nach einem der Ansprüche 1 bis 6, **dadurch gekennzeichnet, dass** der Anti-Stokes-Leuchtstoff eine Anklingphase zwischen 100 $\mu$s und 1000 $\mu$s aufweist und eine Abklingphase von weniger als 300 $\mu$s aufweist.

**8.** Verfahren nach einem der Ansprüche 1 bis 7, **dadurch gekennzeichnet, dass** die vom Anti-Stokes-Leuchtstoff emittierte Emission im sichtbaren oder nicht-sichtbaren Lichtbereich liegt, während die Anregungsstrahlung infrarote Strahlung ist.

**9.** Anordnung zur Echtheitsprüfung eines Sicherheitsdokuments mit einem Sicherheitsmerkmal, welches einen Anti-Stokes-Leuchtstoff enthält, umfassend eine Lichtquelle zur Bestrahlung des Sicherheitsmerkmals mit einer Anregungsstrahlung, einen Fotosensor zum Erfassen der Emissionsantwort des Sicherheitsmerkmals, eine Speichereinheit und eine Datenverarbeitungseinheit, **dadurch gekennzeichnet, dass** die Anordnung konfiguriert ist, um eine Verfahren gemäß einem der Ansprüche 1 bis 8 auszuführen.

## Claims

**1.** Method for authenticity testing of a safety feature containing an anti-Stokes fluorescent material in which the wavelength of an electromagnetic emission is shorter than the wavelength of an absorbed electromagnetic excitation radiation, comprising the following steps:

a) in a calibration mode:

- excitation of a plurality of calibration patterns of the safety feature by means of the excitation radiation for an excitation period and subsequent termination of the excitation, wherein the excitation period comprises at least one response phase and one decay phase;
- recording the emission responses of the calibration patterns over time and selection of a plurality of emission responses of different calibration patterns;
- determining the slope of the selected emission responses;
- specifying a first control time ($\tau_{on}$) in the response phase before reaching the saturation intensity and a second control time ($\tau_{off}$) in the decay phase after the excitation has ended;
- specifying a first validity value corresponding to the maximum value of the slope of the selected calibration patterns at the first control time ($\tau_{on}$) and a second validity value corresponding to the maximum value of the slope of the selected calibration patterns at the second control time ($\tau_{off}$) ;

b) in a test mode:

- excitation of the safety feature to be tested by means of the excitation radiation over the excitation period and subsequent termination of the excitation;
- recording the emission response of the safety feature to be tested at least at the first control time ($\tau_{on}$) and at the second control time ($\tau_{off}$);
- determining the slope of the recorded emission response;

- classifying the security feature to be checked as "genuine" if the slope values at the first control time ($\tau_{on}$) are not greater than the first validity value and at the second control time ($\tau_{off}$) not greater than the second validity value.

**2.** The method according to Claim 1, **characterized in that**, in the calibration mode of at least three, preferably of four or more calibration samples, the emission responses are recorded and selected.

**3.** The method according to Claim 1 or 2, **characterized in that** the excitation with the excitation radiation is carried out until a saturation intensity of the emission is reached before the excitation is terminated.

**4.** The method according to any one of the Claims 1 to 3, **characterized in that** the first control time ($\tau_{on}$) is determined at the time at which, in the response phase, the emission response of the calibration pattern with the highest saturation intensity has reached about 63.2% of this saturation intensity, and that the second control time is determined ($\tau_{off}$) at the time at which, in the decay phase, the emission response of the calibration pattern with the highest saturation intensity has reached about 36.8% of this saturation intensity.

**5.** Method according to any one of the Claims 1 to 4, furthermore comprising the following steps: in calibration mode, specifying a third validity value which corresponds to the minimum value of the slope of the selected calibration patterns at the first control time ($\tau_{on}$), and selecting a fourth validity value corresponding to the minimum value of the slope of the selected calibration patterns at the second control time ($\tau_{off}$); and, in test mode, classifying the security feature to be tested as "genuine" if the slope values at the first control time ($\tau_{on}$) are within a range between the first and third validity value and, at the second control time ($\tau_{off}$), within a range between the second and fourth validity value.

**6.** The method according to any one of the Claims 1 to 5, **characterized in that** the anti-Stokes fluorescent material is a gadolinium oxysulfide, in particular, the composition $Gd_2O_2S$, in which ytterbium and thulium are doped.

**7.** The method according to any one of Claims 1 to 6, **characterized in that** the anti-Stokes fluorescent material has a response phase between 100 μs and 1000 μs and has a decay phase of less than 300 ps.

**8.** The method according to any one of Claims 1 to 7, **characterized in that** the emission emitted by the anti-Stokes fluorescent material is within the visible or non-visible light range, while the excitation radiation is infrared radiation.

**9.** Assembly for the authentication of a security document with a security feature, which contains an anti-Stokes fluorescent material, comprising a light source for irradiating the safety feature with excitation radiation, a photosensor for detecting the emission response of the safety feature, a memory unit and a data-processing unit, **characterized in that** the assembly is configured to carry out a method according to Claims 1 to 8.

**Revendications**

**1.** Procédé, destiné à vérifier l'authenticité d'une caractéristique de sécurité, laquelle contient une substance luminescente anti-stokes, pour laquelle la longueur d'onde d'une émission électromagnétique est plus courte que la longueur d'onde d'un rayonnement électromagnétique d'excitation absorbant, comprenant les étapes suivantes consistant à :

a) dans un mode d'étalonnage :

- exciter plusieurs motifs d'étalonnage de la caractéristique de sécurité au moyen du rayonnement d'excitation sur une période d'excitation et par la suite, mettre fin à l'excitation, la période d'excitation comprenant au moins une phase d'établissement et une phase d'extinction ;
- détecter les réponses d'émission des motifs d'étalonnage dans le temps et sélectionner plusieurs réponses d'émission de différents motifs d'étalonnage ;
- déterminer la pente des réponses d'émission sélectionnées ;
- fixer un premier moment de contrôle ($\tau_{on}$) dans la phase d'établissement, avant l'atteinte de l'intensité de saturation et un deuxième moment de contrôle ($\tau_{off}$) dans la phase d'extinction, après la fin de l'excitation ;
- fixer une première valeur de validité, laquelle correspond à la valeur maximale de la pente du motif d'étalonnage sélectionné au premier moment de contrôle ($\tau_{on}$) et une deuxième valeur de validité, laquelle correspond à la valeur maximale de la pente du motif d'étalonnage sélectionné au deuxième moment de contrôle ($\tau_{off}$) ;

b) dans un mode de vérification :

- exciter la caractéristique de sécurité qu'il convient de vérifier au moyen du rayonnement d'excitation sur la période d'excitation et par la suite, mettre fin à l'excitation ;

- détecter la réponse d'émission de la caractéristique de sécurité qu'il convient de vérifier, au moins au premier moment de contrôle ($\tau_{on}$) et au deuxième moment de contrôle ($\tau_{off}$) ;

- déterminer la pente de la réponse d'émission détectée ;

- classifier la caractéristique de sécurité qu'il convient de vérifier avec le statut « authentique », si les valeurs de la pente au premier moment de contrôle ($\tau_{on}$) ne sont pas supérieures à la première valeur de validité et au deuxième moment de contrôle ($\tau_{off}$) ne sont pas supérieures à la deuxième valeur de validité.

2. Procédé selon la revendication 1, **caractérisé en ce qu'**en mode d'étalonnage sont détectées et sélectionnées les réponses d'émission d'au moins trois, de préférence de quatre motifs d'étalonnage ou plus.

3. Procédé selon la revendication 1 ou 2, **caractérisé en ce que** l'excitation avec le rayonnement d'excitation est effectuée jusqu'à l'atteinte d'une intensité de saturation de l'émission, avant de mettre fin à l'excitation.

4. Procédé selon l'une quelconque des revendications 1 à 3, **caractérisé en ce que** le premier moment de contrôle ($\tau_{on}$) est fixé au moment auquel, dans la phase d'établissement, la réponse d'émission du motif d'étalonnage présentant l'intensité de saturation la plus élevée a atteint environ 63,2 % de ladite intensité de saturation, et **en ce que** le deuxième moment de contrôle ($\tau_{off}$) est fixé au moment auquel, dans la phase d'extinction, la réponse d'émission du motif d'étalonnage présentant l'intensité de saturation la plus élevée a atteint environ 36,8 % de ladite l'intensité de saturation.

5. Procédé selon l'une quelconque des revendications 1 à 4, comprenant par ailleurs les étapes suivantes, consistant à : en mode d'étalonnage, fixer une troisième valeur de validité, laquelle correspond à la valeur minimale de la pente du motif d'étalonnage sélectionné au premier moment de contrôle ($\tau_{on}$) et une quatrième valeur de validité, laquelle correspond à la valeur minimale de la pente du motif d'étalonnage sélectionné au deuxième moment de contrôle ($\tau_{off}$) ; et en mode de vérification, classifier la caractéristique de sécurité qu'il convient de vérifier avec le statut « authentique » si les valeurs de la pente au premier moment de contrôle ($\tau_{on}$) se situent dans l'ordre compris entre la première et la troisième valeur de validité et au deuxième moment de contrôle ($\tau_{off}$), se situent dans l'ordre compris entre la deuxième et la quatrième valeur de validité.

6. Procédé selon l'une quelconque des revendications 1 à 5, **caractérisé en ce que** la substance luminescente anti-stokes est un sulfure d'oxyde de gadolinium, notamment de composition $Gd_2O_2S$, dans laquelle sont dopés de l'ytterbium et du thulium.

7. Procédé selon l'une quelconque des revendications 1 à 6, **caractérisé en ce que** la substance luminescente anti-stokes présente une phase d'établissement comprise entre 100 $\mu$s et 1000 $\mu$s et une phase d'extinction inférieure à 300 $\mu$s.

8. Procédé selon l'une quelconque des revendications 1 à 7, **caractérisé en ce que** l'émission émise par la substance luminescente anti-stokes se situe dans le domaine de la lumière visible ou non visible, alors que le rayonnement d'excitation est un rayonnement infrarouge.

9. Ensemble, destiné à vérifier l'authenticité d'un document de sécurité présentant une caractéristique de sécurité, laquelle contient une substance luminescente anti-stokes, comprenant une source lumineuse, destinée à irradier la caractéristique de sécurité avec un rayonnement d'excitation, un capteur photosensible, destiné à détecter la réponse d'émission de la caractéristique de sécurité, une unité de mémoire et une unité de traitement de données, **caractérisé en ce que** l'ensemble est configuré pour réaliser un procédé selon l'une quelconque des revendications 1 à 8.

# Fig.

EP 3 535 735 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0053183 B1
- DE 2547768 A1
- GB 2258659 A
- GB 2258660 A
- US 5698397 A
- DE 10208397 A1
- DE 10322794 A1
- DE 10113268 A1
- EP 1241242 A2
- DE 102004056007 A1